(19) Europäisches Patentamt
European Patent Office
Office européen des brevets

(11) Veröffentlichungsnummer: **0 176 797**
**B1**

(12) # EUROPÄISCHE PATENTSCHRIFT

(45) Veröffentlichungstag der Patentschrift: **14.11.90**

(51) Int. Cl.⁵: **C 09 K 3/16,** C 08 K 5/42, D 06 M 13/256

(21) Anmeldenummer: **85111227.6**

(22) Anmeldetag: **05.09.85**

(54) **Verwendung von Ethersulfonaten als Antistatika.**

(30) Priorität: **29.09.84 DE 3435841**

(43) Veröffentlichungstag der Anmeldung:
**09.04.86 Patentblatt 86/15**

(45) Bekanntmachung des Hinweises auf die Patenterteilung:
**14.11.90 Patentblatt 90/46**

(84) Benannte Vertragsstaaten:
**AT BE CH DE FR GB IT LI NL**

(56) Entgegenhaltungen:
**DE-A-2 642 894**
**DE-A-2 643 699**
**DE-B-1 039 509**
**FR-A-1 298 737**
**FR-A-2 303 586**

(73) Patentinhaber: **Henkel Kommanditgesellschaft auf Aktien**
**Postfach 1100 Henkelstrasse 67**
**D-4000 Düsseldorf-Holthausen (DE)**

(72) Erfinder: **Veitenhansl, Rudolf, Dr.**
**Röntgenstrasse 33**
**D-5657 Haan (DE)**
Erfinder: **Fröschke, Wolfgang**
**Erkrath Strasse 45**
**D-5600 Wuppertal (DE)**
Erfinder: **Piorr, Robert, Dr.**
**Kieselei 12**
**D-4030 Ratingen-Hösel (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 176 797 B1

Courier Press, Leamington Spa, England.

**Beschreibung**

Die vorliegende Erfindung beftrifft die Verwendung bestimmter sulfonierter Polyether als Mittel zur Verhinderung der statischen Aufladung von Kunststoffoberflächen.

Kunststoffe besitzen aufgrund ihres hohen spezifischen elektrischen Widerstandes die Eigenschaft, elektrische Ladungen an ihren Oberflächen zu akkumulieren. Diese statische Aufladung der Kunststoffe, die besonders stark bei Reibbeanspruchungen auftritt, ist in der Regel unerwünscht, und man versucht seit langem, durch verschiedenste Maßnahmen, insbesondere aber durch besondere Zusatzstoffe, sogenannte Antistatika, die Aufladung auf Dauer oder vorübergehend zu verhindern. So kennt man als innere Antistatika solche Stoffe, die den Kunststoffen bereits vor der Formgebung zugemischt werden und als äußere Antistatika Mittel, die nachträglich auf die Oberflächen aufgebracht werden.

Bereits aus der großen Zahl der für diese Zwecke vorgeschlagenen Verbindungen läßt sich erkennen, daß ein universelles, d.h., für alle Kunststoffe und Anwendungsgebiete gleichermaßen gut geeignetes Antistatikum bis heute nicht gefunden wurde. Vielmehr zeigen die meisten der vorgeschlagenen Verbindungen an vielen Kunststoffen Schwächen, wie mangelnde Verträglichkeit, geringe Neigung zur Anreicherung an der Oberfläche oder geringe Haftung an der Oberfläche, oder sie wirken nur unter bestimmten Bedingungen, wie etwa hohe relative Luftfeuchtigkeit. Andere wiederum können aufgrund ihrer toxischen Eigenschaften oder ihrer Farbe nur beschränkt eingesetzt werden.

Eine besondere Bedeutung kommt heute den Antistatika auf dem Gebiet der Textilien zu, weil zum einen der Anteil der synthetischen Fasern ständig wächst und zum anderen immer schneller laufende Maschinen verwendet werden, in denen die Fasern extrem hohen Reibbeanspruchungen ausgesetzt sind. Auch auf diesem Spezialgebiet fehlen Antistatika mit universeller Anwendbarkeit nicht nur für die Verarbeitung von Endlosfasern (Filamenten) und Stapelfasern sondern auch für die Behandlung von Halbfertig- und Fertigprodukten. Ein besonderes Problem stellt dabei die antistatische Ausrüstung von Polyamidfasern dar, dies, obwohl Polyamid (PA) eine höhere Affinität für Wasser aufweist als andere synthetische Fasermaterialien, wie Polyester (PES) oder Polyacrylnitril (PAC). Die heute üblichen äußeren Antistatika, wie beispielsweise ethoxylierte Fettamine, langkettige Phosphorsäurepartialestersalze und langkettige Paraffinsulfonatsalze führen auf PA immer nur zu einer kurzzeitigen Minderung der elektrostatischen Aufladung und verlieren ihre Wirksamkeit in Zeiträumen von Tagen und wenigen Wochen, ohne daß die Ursachen dafür bis heute geklärt wären.

Es bestand daher die Aufgabe, ein Antistatikum für Kunststoffe zu finden, das einen breiten Anwendungsbereich abdeckt. Eine weitere Aufgabe bestand darin, ein solches Antistatikum insbesondere für die Anwendung auf dem Textilgebiet zu entwickeln, wobei eine ganz spezielle Aufgabe darin lag, ein Antistatikum mit lang anhaltender Wirkung an Polyamidfasern bereit zu stellen.

Die genannten Aufgaben werden erfindungsgemäß dadurch gelöst, daß man als Antistatika für Kunststoffe wasserlösliche Salze von Sulfonsäuren verwendet, wie sie bei der Sulfonierung von Alkenylalkylpolyglykolethern der Formel I

$$R—O(—C_nH_{2n}O)_x—R^1 \qquad I$$

mit Schwefeltrioxid und nachfolgender Hydrolyse entstehen. In Formel I bedeuten dabei R einen geradkettigen Alkenylrest mit 10—22 C-Atomen, $R^1$ einen Alkylrest mit 1—12 C-Atomen und n eine ganze Zahl von 2—4, während x Werte zwischen 0 und 35 annehmen kann. Als Kationen enthalten die Salze vorzugsweise Alkali-, Erdalkali- und Ammoniumionen, dich sich von Ammoniak oder von Alkanolaminen mit bis zu 9 C-Atomen ableiten.

Vorzugsweise verwendet man Salze solcher Sulfonsauren, in deren Ausgangsmaterial R einen ungesattigten Fettalkylrest, insbesondere den Oleyl, den Linoleyl oder den vom Erucaalkohol ableitbaren $C_{22}$-Fettalkenylrest darstellte. Der Alkylrest $R^1$, der auch verzweigt sein kann, hat vorzugsweise 1 bis 8 C-Atome. Insbesondere bedeutet $R^1$ den n-Butylrest. Für n liegen die bevorzugten Werte bei 2 und 3, d.h., bei solchen Produkten, die sich von Polyethylenglykolethern oder Polypropylenglykolethern oder von gemischten Poly(ethylen-/propylen-glykol)ethern ableiten, wobei x dann vorzugsweise Werte von 5 bis 30 bedeutet. Bevorzugte Kationen sind die Natrium-, Kalium-, Ethanolammonium-, Diethanolammonium und Triethanolammoniumionen.

Daß Schwefelsäurehalbester oder deren Salze bei Verwendung als Spulöle eine antistatische Wirkung zeigen können, ist aus der französischen Patentschrift FR 1 298 737 bekannt. Wäßrige Formulierungen, die Sulfonate oder Sulfate enthalten und die als Imprägnierungen für Materialien aus Zellulose eingesetzt werden, sind aus der französischen Patentschrift FR 2 303 586 bekannt.

Bekannt ist ebenfalls die Verwendung von Alkylsulfonaten oder Alkenylsulfonaten als Bestandteile von granulierten Reinigungsmitteln; sie wird zum Beispiel in den deutschen Patentanschriften DE 26 42 894 und DE 26 43 599 beschrieben.

Die deutsche Patentschrift DE 1 039 509 beschreibt die Herstellung von Alkenylethersulfonaten durch die Umsetzung von Sulfonierungsreagenzien mit endständigen Alkoxypentenylhalogeniden.

Ein Teil der erfindungsgemäß verwendbaren Alkalisalze ist bereits in der älteren deutschen Patentanmeldung (P 33 31 513.2) beschrieben worden, in der darüber hinaus ein Herstellungsverfahren für diese Verbindungen und deren Verwendung als Tenside für Wasch- und Reinigungsmittel beschrieben

werden. Die dort nicht genannten Sulfonsäuresalze sind ein weiterer Gegenstand der vorliegenden Erfindung.

Analog zu dem in jener Patentanmeldung angegebenen Verfahren lassen sich auch alle anderen erfindungsgemäß verwendbaren Sulfonsäuresalze dadurch herstellen, daß man einen Alkenylalkylpolyglykolether der Formel I

$$R—O(—C_nH_{2n}O)_x—R^1 \qquad I$$

in der R, $R^1$, n und x die oben genannte Bedeutung haben, mit Schwefeltrioxid umsetzt, das Umsetzungsprodukt in die wäßrige Lösung von 1—1,2 Äquivalenten einer geeigneten Base pro Mol angelagertes $SO_3$ einträgt und die Lösung bis zur Hydrolyse gebildeter Sultone erwärmt.

Bei der Umsetzung der Alkenylalkylpolyglykolether der allgemeinen Formel I mit Schwefeltrioxid entstehen neben ungesättigten Ethersulfonsäuren auch Sultone, aus denen bei Hydrolyse neben den entsprechenden Hydroxysulfonsäuren auch durch Wasseraustritt weitere ungesättigte Ethersulfonsäuren entstehen. Die erfindungsgemäß verwendeten Salze leiten sich deshalb in der Regel von einem Ethersulfonsäuregemisch ab, das im wesentlichen die vorstehend erwähnten Sulfonsäuren enthält, die sich zusammenfassend auch mit der Formel II

$$HO_3S—R^2—O(—C_nH_{2n}O)_x—R^1 \qquad II$$

wiedergeben lassen. $R^1$, n und x haben die oben genannten Bedeutungen und $R^2$ ist die aus R hervorgegangene Alkenylen-, Hydroxyalkylen- oder Hydroxyalkenylengruppe mit 10—22 C-Atomen.

Die Ausgangsprodukte der Formel I sind nach literaturbekannten Verfahren zugänglich. Ihre Herstellung geht aus von ungesättigten Alkoholen der Formel R—OH. Diese werden nach literaturbekanntem Verfahren mit x Mol eines Alkylenoxids der Formel $C_nH_{2n}O$, vorzugsweise mit Ethylenoxid oder Propylenoxid oder Gemischen dieser Alkylenoxide, umgesetzt. Dabei werden Gemische homologer Oxalkylate erhalten, deren mittlerer Oxalkylierungsgrad der Menge des angelagerten Alkylenoxids entspricht. Die Veretherung der endständigen Hydroxylgruppe der ungesättigten Oxalkylate erfolgt nach ebenfalls literaturbekannten Methoden. Sie kann z.B. in der Weise durchgeführt werden, daß das Oxalkylat mit einem Alkalimetall in das Alkoholat überführt wird, und dieses mit einem Alkylhalogenid, z.B. mit einem Alkylchlorid der Formel $R^1$—Cl, zur Umsetzung gebracht wird. Ein anderes Verfahren besteht darin, daß das Oxalkylat mit einem Alkylhalogenid, in Gegenwart eines feinpulverisierten Alkalimetallhydroxids bei erhöhter Temperatur umgesetzt wird. Schließlich kann das Oxalkylat mit einem Alkylchlorid oder Alkylbromid der allgemeinen Formel $R^1$—Cl oder $R^1$—Br in Gegenwart einer wäßrigen Lösung von NaOH oder KOH gemäß DE—PS—2.800.710 zur Umsetzung gebracht werden.

Als ungesättigter Alkohol R—OH wird bevorzugt ein ungesättigter Fettalkohol mit 16—22 C-Atomen, insbesondere ein Alkohol aus der Gruppe Oleylalkohol, Linoleylalkohol, Erucaalkohol oder ein Gemisch solcher Alkohole, z.B. ein technischer, überwiegend aus solchen Alkoholen bestehender Fettalkoholschnitt eingesetzt. Geringe Anteile an gesättigten Alkoholen, z.B., an Cetyl und Stearylalkohol sind tragbar, vor allem, wenn die daraus durch Oxalkylierung und Veretherung hergestellten Produkte der allgemeinen Formel I selbst wasserlöslich sind. Besonders bevorzugt werden technische Cetyl-Oleyl- und Oleyl-Linoleyl-Alkoholschnitte mit einer Jodzahl im Bereich von 70—130 eingestezt.

Die Verwendung der genannten Sulfonsäuresalze erfolgt vorzugsweise als äußere Antistatika, d.h., die Salze werden nach der ersten Formgebung der Kunststoffgegenstände auf deren Oberflächen aufgebracht. Als Applikationsform werden vorzugsweise Lösungen der Salze in geeigneten Lösungsmitteln, insbesondere in Wasser gewählt, so daß, beispielsweise durch Aufsprühen, Aufstreichen oder Aufpinseln, leicht eine gleichmäßige Ausrüstung der Oberflächen vorgenommen werden kann. Neben der diskontinuierlichen Auftragung kommt vor allem bei Endlosfertigungen, wie etwa bei der Faserherstellung, die kontinuierliche Auftragung in Betracht, die beispielsweise mit feststehenden Düsen, Walzen oder Tauchbädern erfolgen kann.

Vorzugsweise werden die erfindungsgemäßen Antistatika nicht allein, sondern in Form von Kombinationen mit anderen Kunststoffhilfsmitteln angewendet. Auf dem Gebiet der Herstellung und Verarbeitung von Synthesefasern sind dies beispielsweise Glättemittel, Haftmittel, Appreturmittel und Hochveredelungsmittel. Bei der Ausrüstung von Teppichware oder Nadelfilz können die Antistatika beispielsweise zusammen mit den nassen gefüllten Latexvorstrichen, die zur Rückenbeschichtung und Verfestigung dienen, aufgebracht werden.

Die Verwendung der erfindungsgemäß Antistatika ist besonders dann von Vorteil, wenn eine lang anhaltende, aber dennoch leicht wieder entfernbare Ausrüstung des Kunststoffes gewünscht wird. Dies ist beispielsweise dann der Fall, wenn nur während der weiteren Verarbeitung des Kunststoffes, nicht aber im späteren Gebrauch der Kunststoffendprodukte mit einer elektrostatischen Aufladung gerechnet werden muß.

Auf dem Gebiet der Textiltechnik, einem bevorzugten Anwendungsgebiet der erfindungsgemäßen Antistatika, sind die Vorteile ihrer Verwendung besonders deutlich an Synthesefasern, wie Polyacrylnitril (PAC), Polyester (PES) und Polypropylen (PP), insbesondere aber an Polyamidfasern zu erkennen. Diese Fasern können damit unmittelbar nach der Herstellung im Schmelzspinnverfahren oder auch in einem

späteren Stadium der Verarbeitung, etwa nach der Weiterverarbeitung zu Stapelfasern, antistatisch ausgerüstet werden und behalten dann die antistatischen Eigenschaften so lange, daß auch nach Zwischenlagerung über mehrere Wochen oder Monate noch eine einwandfreie, durch elektrische Aufladungen ungestörte Weiterverarbeitung, beispielsweise im Spinn-, Schär- und Webprozess, möglich wird, ohne daß es einer erneuten Ausrüstung bedarf.

Beispiele

1. Herstellung der Ethersulfonatsalze (analog DE—A—33 31 513.

Die ungesättigten Ether der Formel $R—O—(C_nH_{2n}O—)_xR^1$ wurden in einem Fallfilmreaktor kontinuierlich mit gasförmigem $SO_3$ bei erhöhter Temperatur umgesetzt. Zur Hydrolyse und Neutralisation wurden die austretenden Produkte in die wäßrige Lösung der gewünschten Base (ca. 2% Überschuß, bezogen auf $SO_3$) eingetragen und in dieser Lösung zum Rückfluß erhitzt, um die Hydrolyse zu vervollständigen. Die entstehenden konzentrierten Lösungen ließen sich ohne weitere Reinigung, gegebenenfalls nach Verdünnung, direkt zur antistatischen Ausrüstung von Kunststoffen verwenden.

Salze, die sich von solchen Basen ableiten, die für die Hydrolyse der Sultone sehr lange Reaktionszeiten erfordern, konnten auf schnellerem Wege aus den Natriumsalzen durch Ionenaustausch hergestellt werden.

Tabelle 1 enthält Beispiele der so hergestellten Verbindungen.

Tabelle 1, Herstellung der Ethersulfonatsalze

| Nr. | R-OH Name | JZ | n | x | $R^1$ | Kation |
|---|---|---|---|---|---|---|
| I | 10-Undecen-1-ol | 147 | 2 | 8 | $C_2H_5$ | Mg |
| II | Oleylalkohol techn. | 94 | 2 | 3 | $n-C_4H_9$ | K |
| III | Oleylalkohol techn. | 94 | 2 | 5 | $n-C_4H_9$ | Na |
| IV | Oleylalkohol techn. | 54 | 2 + 3 (60 : 40) | 5 | $n-C_4H_9$ | Ca |
| V | Oleylalkohol techn. | 94 | 2 | 5 | $n-C_8H_{17}$ | $H_3N-CH_2-CH_2-OH$ |
| VI | Oleylalkohol techn. | 94 | 2 | 5 | $n-C_{12}H_{25}$ | K |
| VII | Oleylalkohol techn. | 94 | 2 | 10 | $n-C_4H_9$ | Na |
| VIII | Oleylalkohol techn. | 94 | 2 | 20 | $n-C_4H_9$ | Na |
| IX | Oleylalkohol techn. | 54 | 2 | 32 | $n-C_4H_9$ | Na |
| X | Linoleylalkohol techn. | 122 | 2 | 20 | $n-C_4H_9$ | Ca |
| XI | Linoleylalkohol techn. | 165 | 4 + 2 (20 : 80) | 20 | $n-C_4H_9$ | $HN(-CH_2-CH_2-OH)_3$ |
| XII | Erucaalkohol techn. | 80 | 2 | 30 | $n-C_4H_9$ | Ca |
| XIII | Erucaalkohol techn. | 80 | 2 | 25 | $CH_3$ | Na |

JZ = Jodzahl

2. Antistatische Ausrüstung von Kunststoffoberflächen

Zur antistatischen Ausrüstung von Schallplatten wurden Lösungen von 0,3 Gewichtsprozent der erfindungsgemäßen Produkte in Isopropanol/Wasser (70:30 Volumenteile) hergestellt und mittels weichen Kunststoffschwammes auf fabrikneue Langspielplatten (Durchmesser 30 cm) aufgetragen. Auf jeder Seite verblieben dabei 0,2—0,4 g der Lösung, die nach kurzer Zeit ohne Tropfenbildung antrockneten. Um die antistatische Wirkung beurteilen zu können, wurden die Platten in einer trockenen, stark mit Staub beladenen Atmosphäre drei Mal nacheinander in die Plattenhülle eingeschoben und schnell wieder herausgezogen. Anschließend wurde die Staubbeladung der Platten im seitlich einfallenden Licht beurteilt und mit der Beladung gleichartig behandelter, aber nicht antistatisch ausgerüsteter Platten verglichen. Die Bewertung erfolgte mit 0 bei völliger Staubfreiheit und mit 5 bei den nicht ausgerüsteten Platten. Die in Tabelle 2 angegebenen Werte sind Mittelwerte aus der Begutachtung von je 4 gleichartige ausgerüsteten und behandelten Platten.

Tabelle 2: Antistatische Wirkung an Schallplatten

| Antistatikum | III | V | XI | ohne |
|---|---|---|---|---|
| Bewertung | 2 | 1 - 2 | 2 - 3 | 5 |

3. Antistatische Ausrüstung von Synthesefasern

Die antistatische Wirkung der erfindungsgemäßen Produkte wurde im Vergleich mit Produkten des heutigen Standes der Technik an Polyamid-Stapelfaser geprüft. Zie diesem Zweck wurde gewaschene und getrocknete Polyamidflocke (Enka-Perlon, dtex 2,2/40 mm, matt, rohweiß) ausgebreitet und so mit Lösungen, die 0,5 Gewichtsprozent der Antistatika enthielten, besprüht, daß jeweils 0,1 oder 0,2 Gewichtsprozent des Antistatikums, bezogen auf Fasergewicht, gleichmäßig auf den Fasern verteilt wurden. Nach dem Trocknen bei 80°C im Trockenschrank wurden die Fasern auf dem Öffner vorbereitet und bei 65% relativer Luftfeuchtigkeit und 22°C in dieser Form gelagert. Anschließend wurde das Fasermaterial zwei Mal auf einer Laborkarde behandelt und unmittelbar danach die dabei entstandene elektrostatische Aufladung des Vlieses ermittelt. Als Meßgröße wurde die elektrische Feldstärke im Abstand von 10 cm vom Vlies gewählt, die sich mit einem Influenzfeldstärkemeßgerät vom Typ Q 475 A der Firma Eltex, Weil am Rhein, messen ließ.

Folgende Antistatika wurden verwendet:

Erfindungsgemäß:

III, VII, VIII: Sulfonat-Natrium-Salze, hergestellt aus Polyglykolethern der Formel

$$R{-}O{-}(C_2H_4O{-})_nCH_2{-}CH_2{-}CH_2{-}CH_3$$

III: R = Oleyl, n = 5

VII: R = Oleyl, n = 10

VIII: R = Oleyl, n = 20

Nach dem Stand der Technik:

A: Kokosamin + 10 Ethylenoxid

B: Kaliumsalz des Reaktionsproduktes aus 6 Mol Laurylalkohol und 1 Mol $P_4O_{10}$

C: Natriumsalz eines langkettigen Alkansulfonates

Die folgende Tabelle 4 gibt die Ergebnisse der Feldstärkemessungen in kV/m in Abhängigkeit von der Lagerzeit der Proben wieder:

Tabelle 4: Prüfergebnisse

| Antistatikum | Auflage Gew.-% | Lagerzeit 2 Tage | 28 Tage | 84 Tage |
|---|---|---|---|---|
| III | 0,1 | 10 - 15 | 20 - 30 | 20 - 30 |
| III | 0,2 | 2 - 8 | 7 - 8 | 8 - 10 |
| VII | 0,1 | 4 - 6 | 6 - 8 | 15 - 16 |
| VII | 0,2 | 2 - 3 | 0,8 - 1 | 1,5 - 2 |
| VIII | 0,1 | 0,7 - 1 | 1 - 1,3 | 3 - 4 |
| VIII | 0,2 | 0,2 - 0,6 | 0,1 | 0,1 |
| A | 0,1 | 3 - 4 | 10 - 15 | 20 - 30 |
| A | 0,2 | 0,9 | 8 - 10 | 20 - 30 |
| B | 0,1 | 0,6 | 30 | 56 - 60 |
| B | 0,2 | 0,2 | 20 | 40 - 50 |
| C | 0,1 | 100 | > 120 | > 120 |
| C | 0,2 | 80 | > 120 | > 120 |

Die aufgeführten Werte zeigen sowohl die ausgezeichnete Wirksamkeit der erfindungsgemäßen Produkte kurz nach der Applikation als auch den hervorragenden Erhalt der Wirkung selbst nach einer Lagerzeit von 84 Tagen.

Ähnlich positive Ergebnisse erhält man an anderen synthetischen Fasern, insbesondere an Polyester und Polyacrylnitril, wobei auch hier nicht nur die Verbindungen III, VII und VIII, sondern auch die übrigen genannten erfindungsgemäßen Sulfonsäuresalze gute bis sehr gute Resultate liefern.

## Patentansprüche

1. Verwendung wasserlöslicher Salze von Sulfonsäuren, wie sie bei der Sulfonierung von Alkenylalkylpolyglykolethern der Formel I

$$R—O(—C_nH_{2n}O)_x—R^1$$

mit Schwefeltrioxid und nachfolgender Hydrolyse entstehen, wobei in Formel I R einen geradkettigen Alkenylrest mit 10—22 C-Atomen, $R^1$ einen Alkylrest mit 1—12 C-Atomen, n eine ganze Zahl von 2—4 und x Werte zwischen 0 und 35 bedeuten und die Kationen der Salze Alkali-, Erdalkali- oder Ammoniumionen sind, die sich von Ammoniak oder von Alkanolaminen mit biz zu 9 C-Atomen ableiten, als Antistatika für Kunststoffe.

2. Verwendung wasserlöslicher Salze von Sulfonsäuren nach Anspruch 1, dadurch gekennzeichnet, daß in Formel I n den Wert 2 oder 3 und x Werte von 5 bis 30 bedeuten.

3. Verwendung wasserlöslicher Salze von Sulfonsäuren nach einem der Ansprüche 1 oder 2, dadurch gekennzeichnet, daß R in Formel I den Oleyl-, den Linoleyl- oder den vom Erucaalkohol ableitbaren $C_{22}$-Fettalkenylrest bedeutet.

4. Verwendung wasserlöslicher Salze von Sulfonsäuren nach einem der Ansprüche 1 bis 3, dadurch gekennzeichnet, daß $R^1$ in Formel I den n-Butylrest bedeutet.

5. Verwendung wasserlöslicher Salze von Sulfonsäuren nach einem der Ansprüche 1 bis 4, dadurch gekennzeichnet, daß die Salze als Kationen Natrium-, Kalium-, Ethanolammonium-, Diethanolammonium oder Triethanolammoniumionen enthalten.

6. Verwendung wasserlöslicher Salze von Sulfonsäuren nach einem Ansprüche 1 bis 5, dadurch gekennzeichnet, daß sie als Antistatika an Synthesefasern verwendet werden.

7. Verwendung wasserlöslicher Salze von Sulfonsäuren nach Anspruch 6, dadurch gekennzeichnet, daß sie an Polyamidfasern verwendet werden.

8. Wasserlösliche Salze von Sulfonsäuren, wie sie bei der Sulfonierung von Alkenylalkylpolyglykolethern der Formel I mit Schwefeltrioxid und nachfolgender Hydrolyse entstehen, wobei in Formel I R einen geradkettigen Alkenylrest mit 10—22 C-Atomen, $R^1$ einen Alkylrest mit 1—12 C-Atomen, n eine ganze Zahl von 2—4 und x Werte zwischen 0 und 35 bedeuten und die Kationen der Salze Erdalkali- oder Ammoniumionen sind, die sich von Ammoniak oder von Alkanolaminen mit bis zu 9 C-Atomen ableiten.

9. Wasserlösliche Salze von Sulfonsäuren, wie sie bei der Sulfonierung von Alkenylalkylpolyglykolethern der Formel I mit Schwefeltrioxid und nachfolgender Hydrolyse entstehen, wobei in Formel I R einen geradkettigen Alkenylrest mit 10—14 oder 20—22 C-Atomen, $R^1$ einen Alkylrest mit 1—12 C-Atomen, n eine ganze Zahl von 2—4 und x Werte zwischen 0 und 35 bedeuten und die Kationen der Salze Alkaliionen sind.

10. Wasserlösliche Salze von Sulfonsäuren, wie sie bei der Sulfonierung von Alkenylalkylpolyglykolethern der Formel I mit Schwefeltrioxid und nachfolgender Hydrolyse entstehen, wobei in Formel I R einen geradkettigen Alkenylrest mit 10—22 C-Atomen, $R^1$ einen Alkylrest mit 7—12 C-Atomen, n eine ganze Zahl von 2—4 und x Werte zwischen 0 und 35 bedeuten können und die Kationen der Salze Alkaliionen sind.

**Revendications**

1. Utilisation de sels solubles dans l'eau des acides sulfoniques comme ceux qui se produisent par sulfonation d'éthers d'alcenylpolyglycols de formule I:

$$R—O(—C_nH_{2n}O)_x—R^1$$

avec l'anhydrique sulfurique et hydrolise subséquente, dans laquelle R est un radical alcenyle en chaîne droite ayant de 10 à 22 atomes de carbone; $R^1$ est un radical alcoyle ayant de 1 à 12 atomes de carbone; n est un nombre entier de 2 à 4 pendant que x peut recevoir x une valeur comprise entre 0 et 35; et les cations des sels, sont des ions alcalins, alcalinoterreux ou des ions ammonium qui dérivant de l'ammoniac ou l'alcanolamines ayant jusqu'à 9 atomes de carbone, en étant qu'antistatiques pour les matières plastiques.

2. Utilisation de sels solubles dans l'eau d'acides sulfoniques selon la revendication 1, caractérisée en ce que dans la formule I, n représente la valeur 2 ou 3 et x des valeurs de 5 à 30.

3. Utilisation de sels solubles dans l'eau d'acides sulfoniques selon l'une des revendications 1 ou 2, caractérisée en ce que R dans la formule I signifie un radical alcényle gras en $C_{22}$ qui dérive de l'alcool oléylique, de l'alcool linoléique ou de l'alcool érucique.

4. Utilisation de sels solubles dans l'eau d'acides sulfoniques selon l'une des revendications 1 à 3, caractérisée en ce que $R^1$ dans la formule I signifie le radical n-butyle.

5. Utilisation de sels solubles dans l'eau d'acides sulfoniques selon l'une des revendications 1 à 4, caractérisée en ce que les sels contiennent en tant que cations, des ions sodium, potassium éthanolammonium, diéthanolammonium ou triéthanolammonium.

6. Utilisation de sels solubles dans l'eau d'acides sulfoniques selon l'une des revendications 1 à 5, caractérisée en ce qu'ils sont utilisés comme antistatiques sur des fibres synthétiques.

7. Utilisation de sels solubles dans l'eau d'acides sulfoniques selon la revendication 6, caractérisée en ce qu'ils sont utilisés sur des fibres de polyamide.

8. Sels solubles dans l'eau d'acides sulfoniques comme ils résultent de la sulfonation d'éthers d'alcénylalcoylpolyglycols de formule I par l'anhydride sulfurique et hydrolyse subséquente, où dans la formule I, R signifie un radical alcényle en chaîne droite ayant de 10 à 22 atomes de carbone, $R^1$ signifie un radical alcoyle ayant de 1 à 12 atomes de carbone, n est un nombre entier de 2 à 4 et x représente des valeurs comprises entre 0 et 35 et les cations des sels, sont des ions alcalino-terreux ou ammonium qui dérivant de l'ammoniac ou d'alcalanolamines ayant jusqu'à 9 atomes de carbone.

9. Sels solubles dans l'eau d'acides sulfoniques comme ils résultent de la sulfonation d'éthers d'alcénylalcoylpolyglycols de formule I par l'anhydride sulfurique et hydrolyse subséquente, où dans la formule I, R signifie un radical alcényle en chaîne droite ayant de 10 à 14 ou 20 à 22 atomes de carbone, $R^1$ signifie un radical alcoyle ayant de 1 à 12 atomes de carbone, n est un nombre entier de 2 à 4 et x représente des valeurs comprises entre 0 et 35 et les cations des sels sont des ions métal alcalin.

10. Sels solubles dans l'eau d'acides sulfoniques comme ils résultent par sulfonation d'éthers d'alcénylalcoylpolyglycols de formule I avec l'anhydride sulfurique et hydrolyse subséquente, où dans la formule I, R peut signifier un radical alcényle en chaîne droite ayant de 10 à 22 atomes de carbone, $R^1$ un radical alcoyle ayant de 7 à 12 atomes de carbone, n est un nombre entier de 2 à 4 et x des valeurs comprises entre 0 et 35 et les cations des sels sont des ions de métal alcalin.

**Claims**

1. The use of water-soluble salts of sulfonic acids of the type formed in the sulfonation of alkenylalkyl polyglycol ethers corresponding to the following formula

$$R—O(—C_nH_{2n}O)_x—R^1 \quad I$$

with sulfur trioxide and subsequent hydrolysis, R in formula I being a straight-chain $C_{10-22}$ alkenyl group, $R^1$ being a $C_{1-22}$ alkyl group, n being an integer of from 2 to 4 and x having values of from 0 to 35 and the cations of the salts being alkali, alkaline earth or ammonium ions derived from ammonia or from alkanolamines containing up to 9 carbon atoms, as antistatic agents for plastics.

2. The use of water-soluble salts of sulfonic acids as claimed in Claim 1, characterized in that, in formula I, n has the value 2 or 3 and x has values of from 5 to 30.

3. The use of water-soluble salts of sulfonic acids as claimed in Claim 1 or 2, characterized in that, in formula I, R is the oleyl group, the linoleyl group or the $C_{22}$-fatty alkenyl group derivable from erucic alcohol.

4. The use of water-soluble salts of sulfonic acids as claimed in any of Claims 1 to 3, characterized in that, in formula I, $R^1$ is the n-butyl group.

5. The use of water-soluble salts of sulfonic acids as claimed in any of Claims 1 to 4, characterized in that the salts contain sodium, potassium, ethanolammonium, diethanolammonium or triethanolammonium ions as cations.

6. The use of water-soluble salts of sulfonic acids as claimed in any of Claims 1 to 5, characterized in that they are used as antistatic agents on synthetic fibers.

7. The use of water-soluble salts of sulfonic acids as claimed in Claim 6, characterized in that they are used on polyamide fibers.

8. Water-soluble salts of sulfonic acids of the type formed in the sulfonation of alkenyl alkyl polyglycol ethers corresponding to formula I with sulfur trioxide and subsequent hydrolysis, R in formula I being a straight-chain $C_{10-22}$ alkenyl group, $R^1$ being a $C_{1-12}$ alkyl group, n being an integer of from 2 to 4 and x assuming values of from 0 to 35 and the cations of the salts being alkaline earth or ammonium ions derived from ammonia or from alkanolamines containing up to 9 carbon atoms.

9. Water-soluble salts of sulfonic acids of the type formed in the sulfonation of alkenyl alkyl polyglycol ethers corresponding to formula I with sulfur trioxide and subsequent hydrolysis, R in formula I being a straight-chain $C_{10-40}$ or $C_{20}$ alkenyl group, $R^1$ being a $C_{1-12}$ alkyl group, n being an integer of from 2 to 4 and x having values of from 0 to 35 and the cations of the salts being alkaline ions.

10. Water-soluble salts of sulfonic acids of the type formed in the sulfonation of alkenyl alkyl polyglycol ethers corresponding to formula I with sulfur trioxide and subsequent hydrolysis, R in formula I being a straight-chain $C_{10-22}$ alkenyl group, $R^1$ being a $C_{7-12}$ alkyl group, n being an integer of from 2 to 4 and x having values of from 0 to 35 and the cations of the salts being alkali ions.